# EUROPÄISCHE PATENTSCHRIFT

(11) **EP 1 548 049 B1**
(45) Veröffentlichungstag und Bekanntmachung des Hinweises auf die Patenterteilung: **26.07.2006**
(21) Anmeldenummer: 04029212.0
(22) Anmeldetag: 09.12.2004
(51) Int. Cl.: C08G 77/38, C08G 77/06, C08G 77/46

(54) **Verfahren zur Herstellung von Organosiliciumverbindungen**
Method for preparation of organosilicon compounds
Procédé de préparation de composés organosiliciques

(30) Priorität: 18.12.2003 DE 10359589
(43) Veröffentlichungstag der Anmeldung: 29.06.2005
(73) Patentinhaber: Wacker Chemie AG, 81737 München (DE)
(72) Erfinder: Ochs, Christian, Dr., 84489 Burghausen (DE); Herzig, Christian, Dr., 83329 Waging (DE)
(74) Vertreter: Budczinski, Angelika

(56) Entgegenhaltungen:
- EP-A- 0 277 023
- WO-A-03/037961
- DATABASE WPI Derwent Publications Ltd., London, GB; AN 1977-66045Y XP002327165 & JP 52 093718 A (SHIN-ETSU) 6. August 1977 (1977-08-06)

## Beschreibung

Die vorliegende Erfindung betrifft ein Verfahren zur Herstellung von Organosiliciumverbindungen durch Hydrosilylierungsreaktion in Anwesenheit eines cyclischen Ethers.

Die Additionsreaktion von ungesättigten organischen Verbindungen an SiH-haltige Silane oder Siloxane in Anwesenheit eines Hydrosilylierungs-Katalysators ist seit Jahrzehnten bekannt und stellt wahrscheinlich einen der am häufigsten genutzten Reaktionsschritte zur Synthese organofunktioneller Siliciumverbindungen dar. In zahlreichen Untersuchungen wurde gezeigt, dass die Hydrosilylierungs-Reaktion jedoch nur in bestimmten Fällen glatt und ohne die Bildung von Nebenprodukten verläuft. Typische Nebenreaktionen bei gleichzeitigem Vorliegen von SiH-, Carbinol- und ungesättigter Etherfunktionen sind beispielsweise die Dehydrokondensation und die Acetalbildung, welche oftmals zu unerwünschten Viskositätssteigerungen bis hin zur Vergelung führen.

Zur Unterdrückung von Nebenreaktionen werden nach dem Stand der Technik verschiedene Ansätze diskutiert. Während der Einsatz basischer anorganischer Verbindungen, wie z.B. (Erd)Alkali-Carbonate, -Bicarbonate, -Borate, -Hydroxide und -Oxide sowie NaH₂PO₄ und/oder Na₂HPO₄, vielfache Anwendung findet, empfehlen US 5,191,103 und US 6,372,874 den Zusatz basischer organischer Verbindungen in Form von (sterisch gehinderten) Aminen oder Phosphinen sowie von Alkylaminen mit OH-, Carbonyl- oder Etherfunktionalität. US 4,431,789 und US 4,847,398 dagegen lehren die Zugabe von Carbonsäure-Salzen als schwache Basen. Einen völlig anderen Ansatz beschreiben WO 2003037961 A2 und WO 2003037961 A1: hier werden Lactone, Lactame sowie cyclische Carbonate und Carbamate als Hydrosilylierungsadditiv bevorzugt.

Nachteilig an den genannten Verfahren ist, dass es sich bei den verwendeten Zusätzen größtenteils um in der Siliconphase unlösliche Feststoffe handelt. Dies führt insbesondere bei einer kontinuierlichen Reaktionsführung, wie beispielsweise in Loop-, Rohr- oder Microreaktoren, zu Problemen oder macht organische Lösungsmittel zur Homogenisierung der Reaktionsmischung unentbehrlich. Letzteres stellt jedoch aus ökonomischen Gesichtspunkten einen zusätzlichen Nachteil dar, da zur Entfernung der Lösungsmittel nach erfolgter Umsetzung ein weiterer Prozessschritt (z.B. Destillation und Filtration) nötig wird. Weiterhin ist bekannt, dass in einem heterogenen System Reaktionen nur an der Teilchen-Oberfläche stattfinden, so dass zum Erzielen des gewünschten Effektes Additivmengen im Prozentbereich nötig sind.

Der Einsatz von organischen Basen in Form von Aminen oder Phosphinen ist dagegen insofern problematisch, als dass diese bekanntermaßen bereits in geringsten Mengen inhibierend auf die Hydrosilylierungsreaktion wirken. Dementsprechend werden bei Verwendung der oben genannten, speziellen Amin- und Phosphin-Systeme größere Katalysator-Mengen und höhere Reaktionstemperaturen als üblich benötigt. Ähnliches gilt im übrigen auch für die aufgeführten Carbonsäure-Salze, welche oftmals zu einer Verlangsamung der Hydrosilylierungsreaktion und in speziellen Fällen sogar zu einer verringerten Selektivität führen. Der gravierendste Nachteil der in WO 2003037961 A2 und WO 2003037961 A1 genannten Additive ist ihre im allgemeinen schlechte Verträglichkeit mit Organosiliciumverbindungen. So sind insbesondere cyclische Carbonate und Carbamate sowie Lactame in der Siliconphase bekanntermaßen nur sehr schlecht löslich, so dass auch hier Additivmengen von 1000 ppm und mehr eingesetzt werden müssen.

Es besteht daher ein Bedarf an einem einfachen und kostengünstigen Verfahren, welches eine möglichst nebenproduktarme Synthese organofunktioneller Organosiliciumverbindungen erlaubt.

Gegenstand der Erfindung ist ein Verfahren zur Anlagerung von Si-gebundenem Wasserstoff an aliphatisch ungesättigte Kohlenstoff-Kohlenstoff-Mehrfachbindung und Ethersauerstoffatome enthaltenden Verbindungen in Anwesenheit von Carbinolgruppen, dadurch gekennzeichnet, dass das Reaktionsgemisch als weitere Komponente mindestens einen cyclischen Ether enthält.

Vorzugsweise handelt es sich bei den im erfindungsgemäßen Verfahren eingesetzten Verbindungen mit Si-gebundenem Wasserstoff (1) um Organosiliciumverbindungen enthaltend Einheiten der Formel

Rₐ(R¹O)_{b}H_{c}SiO_{(4-a-b-c)/2} (I),

wobei
R gleich oder verschieden sein kann und einen einwertigen, SiCgebundenen, gegebenenfalls substituierten Kohlenwasserstoffrest, der durch Sauerstoffatome unterbrochen sein kann, bedeutet,
R¹ gleich oder verschieden sein kann und gleich Wasserstoffatom oder einwertiger gegebenenfalls substituierter Kohlenwasserstoffrest, der durch Heteroatome unterbrochen sein kann, bedeutet,
a 0, 1, 2 oder 3 ist,
b 0, 1, 2 oder 3 ist, und
c 0, 1, 2 oder 3, bevorzugt 0 oder 1, ist,
mit der Maßgabe, dass die Summe a+b+c ≤ 4 ist und die Organosiliciumverbindung der Formel (I) pro Molekül mindestens ein Sigebundenes Wasserstoffatom aufweist.

Bei den im erfindungsgemäßen Verfahren eingesetzten Organosiliciumverbindungen kann es sich sowohl um Silane handeln, d.h. Verbindungen der Formel (I) mit a+b+c=4, als auch um Siloxane, d.h. Verbindungen enthaltend Einheiten der Formel (I) mit a+b+c≤3, wobei im Rahmen der vorliegenden Erfindung von dem Begriff Polysiloxan sowohl polymere, oligomere wie auch dimere Siloxane mitumfasst werden sollen. Bevorzugt handelt es sich bei den im erfindungsgemäßen Verfahren eingesetzten Organosiliciumverbindungen um Organopolysiloxane, besonders bevorzugt um solche, die aus Einheiten der Formel (I) bestehen.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest, quatfunktionelle Reste, wie -(CH₂)₃-N(CH₃)₃⁺ einschließlich der zur Kompensation der kationischen Ladung notwendigen Anionen, carbonylfunktionelle Reste, wie z.B. der Propionaldehydrest, polyalkylenoxidfunktionelle Reste, wie z.B. Polyethylenglycolreste, Polypropylenglycolreste oder gemischte Polyetherreste, hydroxyfunktionelle Reste, wie die von prim., sek. oder tert. Alkoholen, wie z.B. der 3-Hydroxypropyl- und 4-Hydroxybutylrest, oder wie die aromatischer Alkohole, wie z.B. der Phenol- oder Eugenolrest, carbonsäurefunktionelle Reste, insbesondere deren Derivate oder Salze, wie der Acetat-, 3-Carboxylato-propyl-, 4-Carboxylatobutyl-, 10-Carboxylato-decyl-, 3-(2,5-Dioxotetrahydrofuranyl)-propyl-, 3-(Ethan-1,2-dicarboxylato)-propyl-, 3-Acryloxypropyl-, 3-Methacryloxy-propyl- oder Undecensilylesterrest, phosphonatofunktionelle Reste, wie z.B. Phosphonatoalkylreste, silalactonfunktionelle Reste, glykosidfunktionelle Reste, wie z.B. solche, bei denen der Glykosidrest, der aus 1 bis 10 Monosaccarideinheiten aufgebaut sein kann, über einen Alkylen- oder Oxyalkylenspacer gebunden ist.

Bevorzugt handelt es sich bei dem Rest R um einen gegebenenfalls mit Halogengruppen, quaternären Stickstoff aufweisenden Gruppen, Carboxylatgruppen, Anhydridgruppen und Amidgruppen substituierten Kohlenwasserstoffrest mit 1 bis 18 Kohlenstoffatomen, besonders bevorzugt um den Methyl-, Ethyl-, Vinyl-, n-Propyl-, n-Octyl-, n-Dodecyl-, n-Octadecyl- und Phenylrest, insbesondere um den Methyl- und Phenylrest.

Falls es sich bei den erfindungsgemäßen Organosiliciumverbindungen um Organopolysiloxane handelt, haben mindestens 50%, besonders bevorzugt mindestens 90%, aller Reste R die Bedeutung von Methyl- oder Phenylrest.

Beispiele für Reste R¹ sind die für Rest R angegebenen Beispiele. Bevorzugt handelt es sich bei Rest R¹ um Wasserstoffatom oder einen Alkylrest mit 1 bis 8 Kohlenstoffatomen, der gegebenenfalls durch Ethersauerstoffatome unterbrochen sein kann. Besonders bevorzugt sind Wasserstoffatom, der Methyl-, Ethyl-, Propyl- und Butylrest.

Bevorzugt handelt es sich bei den erfindungsgemäß eingesetzten Organosiliciumverbindungen enthaltend Einheiten der Formel (I) um lineare oder verzweigte Organopolysiloxane.

Die erfindungsgemäß eingesetzte Komponente (1) kann bei Raumtemperatur und dem Druck der umgebenden Atmosphäre, also etwa 900 bis 1100 hPa, flüssig oder fest sein, bevorzugt flüssig.

Die erfindungsgemäß eingesetzte Komponente (1) hat bei 25°C eine durchschnittliche Viskosität von bevorzugt 1 bis 1 000 000 mm²/s, besonders bevorzugt 1 bis 20 000 mm²/s, insbesondere 5 bis 2 000 mm²/s.

Die erfindungsgemäß eingesetzte Komponente (1) enthält Si-gebundenen Wasserstoff in Mengen von bevorzugt mindestens 0,01 Gewichtsprozent, besonders bevorzugt 0,02 bis 1,66 Gewichtsprozent.

Bei Komponente (1) handelt es sich um handelsübliche Produkte bzw. können nach in der Siliciumchemie gängigen Verfahren hergestellt werden.

Vorzugsweise handelt es sich bei den im erfindungsgemäßen Verfahren eingesetzten aliphatisch ungesättigte Kohlenstoff-Kohlenstoff-Mehrfachbindung und Ethersauerstoffatome enthaltenden Verbindungen (2) um solche ausgewählt aus aliphatisch ungesättigte, lineare oder verzweigte Ether und aliphatisch ungesättigte, lineare oder verzweigte Ethercarbinole, besonders bevorzugt um aliphatisch endständig ungesättigte Ethercarbinole, wobei die Ether und Ethercarbinole Bestandteil von Copolymeren, wie z.B. solche mit Organopolysiloxanblöcken, sein können.

Nach dem erfindungsgemäßen Verfahren werden als aliphatisch endständig ungesättigte, Ethersauerstoffatome und Carbinolgruppen enthaltende Verbindungen vorzugsweise solche eingesetzt, die eine oder mehrere primäre oder sekundäre Carbinolgruppen tragen.

Besonders bevorzugt handelt es sich bei den aliphatisch ungesättigten, Ethersauerstoffatome und Carbinolgruppen enthaltenden Verbindungen um
A) Alkenylether von Di- und Polyolen, wie 1,2-Ethandiol-monoallylether, Diethylenglykolmonoallylether, 1,3-Propandiol-monoallylether, 3-Allyloxy-1,2-propandiol, 2,2-Dimethyl-1,3-propandiol-monoallylether, 2-(Allyloxymethyl)-2-ethyl-1,3-propandiol, 2,2-Bis(allyloxymethyl)-1-butanol, Hexantriolmonoallylether, Hexantrioldiallylether, Pentaerythritolmonoallylether, Pentaerythritoldiallylether und Pentaerythritoltriallylether,
B) Alkenylether von Polyoxyalkylenen der Formel

   R²-{[C₂H₄O]_{d}-C₃H₆O]ₑ-[(CH₂)₄O]_{f}-H}_{y} (II),

   wobei R² einen ein- oder zweiwertigen, aliphatisch ungesättigten organischen Rest mit mindestens 2 Kohlenstoffatomen, bevorzugt 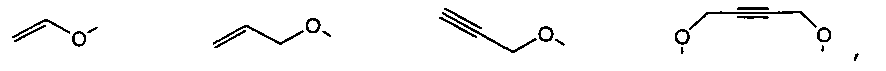 insbesondere bevorzug 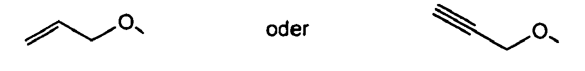 bedeutet, y entsprechend der Wertigkeit von Rest R² gleich 1 oder 2 ist, d, e, f jeweils unabhängig voneinander 0 oder eine ganze Zahl von 1-200, bevorzugt 0-100, besonders bevorzugt 0-50, sind, mit der Maßgabe, dass die Summe d+e+f ≥ 1 ist,
   wie z.B. Vinyl- oder Allylether von Polyethylenglykol, Polypropylenglykol, Poly-(1,4-butandiol) und deren Mischpolymerisate, sowie
C) Alkinylether, wie Ethylenglykol-monopropargylether sowie Alkinylether von Polyoxyalkylenen, wie z.B. Butin-1,4-diol-ethoxylat.

Bevorzugt handelt es sich bei den erfindungsgemäß eingesetzten Ethern ohne Carbinolgruppen um

R³-{[C₂H₄O]_{g}- [C₃H₆O]ₕ- [(CH₂)₄O]ᵢ-R⁴}_{z} (III),

wobei
R³ eine für R² angegebene Bedeutung hat,
R⁴ einen einwertigen Kohlenwasserstoffrest mit 1 bis 20 Kohlenstoffatomen oder Acetylrest, bevorzugt einen Methyl-, 1-Butyl-, Myristyl-, Cetyl-, Stearyl- oder Acetyl-Rest, darstellt,
z entsprechend der Wertigkeit von Rest R³ gleich 1 oder 2 ist, g, h, i jeweils unabhängig voneinander 0 oder eine ganze Zahl von 1-200, bevorzugt 0-100, besonders bevorzugt 0-50, sind, mit der Maßgabe, dass die Summe g+h+i≥0 ist,
wie z.B. Alkenylether, wie Methylvinylether, Ethylvinylether, Methylallylether und Ethylallylether, oder Alkinylether, wie Propargylalkohol-methylether.

Besonders bevorzugt handelt es sich bei den erfindungsgemäß eingesetzten Ethern ohne Carbinolgruppen um solche Verbindungen der Formel (III), bei denen die Summe aus g+h+i≥1 ist und R³ die Bedeutung von 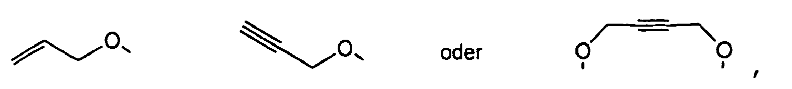 insbesondere von 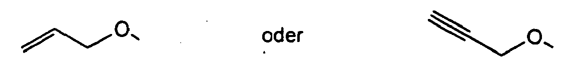 hat.

Bevorzugt handelt es sich bei Komponente (2) um aliphatisch endständig ungesättigte, Ethersauerstoffatome und Carbinolgruppen enthaltende Verbindungen.

Aliphatisch ungesättigte Verbindung (2) wird in Mengen von bevorzugt 0,001 bis 5 Mol, besonders bevorzugt 0,01 bis 2 Mol, jeweils bezogen auf ein Mol Si-gebundenen Wasserstoff, eingesetzt.

Die erfindungsgemäß eingesetzte Komponente (2) kann bei Raumtemperatur und dem Druck der umgebenden Atmosphäre flüssig oder fest sein.

Komponente (2) sind handelsübliche Produkte bzw. können nach in der Organischen Chemie gängigen Verfahren hergestellt werden.

Das erfindungsgemäße Verfahren wird in Anwesenheit von Carbinolgruppen durchgeführt, wobei die Carbinolgruppen in der aliphatisch ungesättigten, Ethersauerstoffatomen aufweisenden Verbindung (2) und/oder in weiteren, gegebenenfalls zugesetzten Carbinolgruppen aufweisenden Verbindungen (3) vorliegen können.

In einer möglichen aber nicht bevorzugten Verfahrensvariante wird Komponente (1) mit Ether ohne Carbinolgruppen als Komponente (2) und Carbinolgruppen aufweisender Verbindung (3) umgesetzt, wobei das Reaktionsgemisch als weitere Komponente mindestens einen cyclischen Ether sowie gegebenenfalls Katalysator (5) enthält.

Beispiele für solche gegebenenfalls zugesetzten Carbinolgruppen aufweisenden Verbindungen (3) sind Alkohole, wie Methanol, Ethanol, n-Propanol, i-Propanol, 1,2-Propandiol, 1,3-Propandiol, 1-Butanol, 2-Butanol, tert.-Butanol, 1,4-Butandiol, 1-Pentanol, 2-Pentanol, 3-Pentanol, 1,5-Pentandiol, 1-Hexanol, Cyclohexanol, 1-Heptanol, 1-Octanol, 1-Decanol, Laurylalkohol, Myristylalkohol, Stearylalkohol, Benzylalkohol, Diethylenglycol, Triethylenglycol, Dipropylenglycol, Ethylenglycolmonomethylether, Ethylenglycolmonoethylether, Ethylenglycolmonobutylether, Diethylenglycolmonomethylether und Diethylenglycolmonobutylether, aliphatisch gesättigte Polyether, wie Polyethylenglycol, Polypropylenglycol, Poly-THF und deren Mischpolymerisate, Monomethyl-, Monoethyl- und Monobutylether sowie Monoacylester aliphatisch gesättigter Polyether, sowie Carbinolgruppen aufweisende Organosiliciumverbindungen, wie solche bestehend aus Dimethylsiloxy-, 3-Hydroxypropylmethylsiloxy-, 3-Hydroxypropyldimethylsiloxy- und/oder Trimethylsiloxyeinheiten oder solche bestehend aus Dimethylsiloxy-, Trimethylsiloxyeinheiten und Polyetherblöcken.

Falls Carbinolgruppen aufweisende Verbindungen (3) eingesetzt werden, handelt es sich bevorzugt um Ethanol, n-Propanol, i-Propanol, 1,2-Propandiol, 1,3-Propandiol, 1-Butanol, 2-Butanol, 1,4-Butandiol, Diethylenglycol, Ethylenglycolmonomethylether, Ethylenglycolmonoethylether, Ethylenglycolmonobutylether, Diethylenglycolmonomethylether und Diethylenglycolmonobutylether, aliphatisch gesättigte Polyether, wie Polyethylenglycol, Polypropylenglycol, Poly-THF und deren Mischpolymerisate, Monomethyl-, Monoethyl- und Monobutylether sowie Monoacylester aliphatisch gesättigter Polyether, wobei i-Propanol, 1,3-Propandiol, 1-Butanol, 1,4-Butandiol, Ethylenglycolmonomethylether, Ethylenglycolmonobutylether, Diethylenglycolmonomethylether und Diethylenglycolmonobutylether besonders bevorzugt sind.

Falls Carbinolgruppen aufweisende Verbindungen (3) eingesetzt werden, handelt es sich um Mengen von bevorzugt 5 bis 200 Gewichtsteile, besonders bevorzugt 10 bis 100 Gewichtsteile, jeweils bezogen auf 100 Gewichtsteile des Gesamtgewicht der Komponenten (1) und (2).

Bei den im erfindungsgemäßen Verfahren eingesetzten cyclischen Ethern (4) kann es sich jeweils unabhängig voneinander um ein oder mehrere gesättigte oder ungesättigte, cyclische Ether handeln, wobei die Ether Monomere oder Teil von Polymeren, wie Organopolysiloxanen, sein können.

Bevorzugt handelt es sich bei den erfindungsgemäß eingesetzten Ethern um Verbindungen, bei denen der Ethercyclus 3 bis 10 Ringatome, besonders bevorzugt 3 bis 8 Ringatome, insbesondere 3 bis 5 Ringatome, aufweist.

Besonders bevorzugt handelt es sich bei Komponente (4) um gesättigte oder ungesättigte, gegebenenfalls substituierte Kohlenwasserstoffe, welche einen oder mehrere cyclische Ether enthalten.

Beispiele für im erfindungsgemäßen Verfahren eingesetzte gesättigte cyclische Ether sind Ethylenoxid, Propylenoxid, 1,2-Epoxybutan, 2,3-Epoxybutan, 2-Methyl-1,2-Epoxypropan, 2,3-Epoxy-2-methylbutan, 1,2-Epoxyhexan, 1,2-Epoxyoctan, 1,2-Epoxydecan, Glycidol, Isopropyl-2,3-epoxypropyl-ether, Butyl-2,3-epoxypropyl-ether, 1,2,7,8-Diepoxyoctan, 1,2,9,10-Diepoxdecan, Butadiendioxid, Limonendioxid, Caryophyllendioxid, Vinylcyclohexendioxid, Oxethan, Tetrahydrofuran, 2,5-Dihydro-tetrahydrofuran, 2,5-Dimethyl-tetrahydrofuran, Tetrahydropyran, 1,3-Dioxan, 1,4-Dioxan, Oxepan, Methyl-1,2-cyclopentenoxid, 1,2-Epoxycyclohexan, 1,4-Epoxycyclohexan, 1,2-Epoxycyclooctan, 1,2-Epoxycyclodecan, 1,2-Epoxycyclododecan, 1,2,4,5-Diepoxycyclohexan, 1,2,5,6-Diepoxycyclooctan, 2,3-Epoxynorbornan und 1,8-Cineol.

Beispiele für im erfindungsgemäßen Verfahren eingesetzte ungesättigten cyclische Ether sind Butadienmonoxid und dessen Mischungen mit Butadiendiepoxid, 1,5-Hexadienmonoxid, 1,7-Octadienmonoxid, 1,9-Decadienmonoxid, Limonenoxid und dessen Mischungen mit Limonendioxid, Caryophyllenoxid und dessen Mischungen mit Caryophyllendioxid, Vinylcyclohexenoxid und dessen Mischungen mit Vinylcyclohexendioxid, Allyl-2,3-epoxypropylether, 1,2-Epoxy-9-decen, Epoxystyrol, 2,3-Epoxypropyl-phenylether, 1,2-Epoxy-1,2,3,4-Tetrahydronaphthalin und 1,4-Epoxy-1,2,3,4-Tetrahydronaphthalin.

Bevorzugt werden als Komponente (4) Isopropyl-2,3-epoxypropylether, Butyl-2,3-epoxypropyl-ether, Phenyl-2,3-Epoxypropylether, Oxethan, Tetrahydrofuran, 2,5-Dihydro-tetrahydrofuran, 2,5-Dimethyl-tetrahydrofuran, Tetrahydropyran, 1,3-Dioxan, 1,4-Dioxan, Oxepan, Methyl-1,2-cyclopentenoxid, 1,2-Epoxycyclohexan, 1,4-Epoxycyclohexan, 1,2-Epoxycyclooctan, 1,2-Epoxycyclodecan, 1,2-Epoxycyclododecan, 2,3-Epoxynorbornan, 1,8-Cineol, Limonenoxid, Caryophyllenoxid, Vinylcyclohexenoxid, Allyl-2,3-epoxypropylether, Epoxystyrol, 1,2-Epoxy-1,2,3,4-Tetrahydronaphthalin und 1,4-Epoxy-1,2,3,4-Tetrahydronaphthalin eingesetzt, besonders bevorzugt Tetrahydrofuran, 1,2-Epoxycyclohexan, Limonenoxid, Allyl-2,3-epoxypropylether und Vinylcyclohexenoxid, insbesondere bevorzugt Tetrahydrofuran, 1,2-Epoxycyclohexan und Limonenoxid.

Nach dem erfindungsgemäßen Verfahren wird Komponente (4) in Mengen von bevorzugt 0,1 bis 50 000 Gew.-ppm (Gewichtsteile je Million Gewichtsteile), besonders bevorzugt in Mengen von 0,1 bis 25 000 Gew.-ppm, ganz besonders bevorzugt in Mengen von 1 bis 10 000 Gew.-ppm und insbesondere bevorzugt in Mengen von 10 bis 1 000 Gew.-ppm, zugesetzt, jeweils bezogen auf das Gesamtgewicht von Komponente (1) und (2).

Komponente (4) sind handelsübliche Produkte bzw. können nach in der Organischen Chemie gängigen Verfahren hergestellt werden.

Das erfindungsgemäße Verfahren wird bevorzugt in Anwesenheit von Katalysatoren (5) durchgeführt, welche die Anlagerung von Si-gebundenen Wasserstoff an aliphatisch ungesättigte Kohlenstoff-Kohlenstoff-Mehrfachbindung fördert.

Beispiele für solche Katalysatoren (5) sind alle bisher bekannten Hydrosilylierungskatalysatoren, wie metallisches und feinverteiltes Platin, das sich auf Trägern wie Siliciumdioxid, Aluminiumoxid oder Aktivkohle befinden kann, Verbindungen oder Komplexe von Platin, wie Platinhalogenide, z.B. H₂PtCl₆·6H₂O, PtCl₄, Na₂PtCl₄·4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆·6H₂O und Cyclohexanon, Platin-Vinylsiloxan-Komplexe, wie Platin-1,3-Divinyl-1,1,3,3-tetramethyldisiloxan-Komplexe mit oder ohne Gehalt an nachweisbarem anorganisch gebundenem Halogen, Bis(γ-Picolin)-platindichlorid, Trimethylendipyridinplatindichlorid, Dicyclopentadienplatindichlorid, Dimethylsulfoxydethylenplatin-(II)-dichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platin-Komplexe.

Bevorzugt handelt es sich bei Katalysator (5) um ein Übergangsmetall aus der Gruppe (VIII) des Periodensystems oder um eine Verbindung oder einen Komplex dieser Übergangsmetalle, wobei die Übergangsmetalle aus der Gruppe der Palladium- oder Platinmetalle besonders bevorzugt, und von diesen wiederum Platin, Palladium, Rhodium und Iridium sowie deren Verbindungen oder Komplexe insbesondere bevorzugt sind.

Falls bei dem erfindungsgemäßen Verfahren Katalysator (5) eingesetzt wird, handelt es sich um Mengen von bevorzugt 0,1 bis 200 Gew.-ppm (Gewichtsteilen je Million Gewichtsteilen), bevorzugt von 1 bis 50 Gew.-ppm, jeweils berechnet als elementares Übergangsmetall und bezogen auf das Gesamtgewicht der Komponenten (1) und (2).

Ferner können bei dem erfindungsgemäßen Verfahren alle weiteren Stoffe (6) eingesetzt werden, die auch bisher in Verfahren zur Anlagerung von Si-gebundenem Wasserstoff an aliphatische C-C-Mehrfachbindung eingesetzt worden sind.

Beispiele für solche weitere Stoffe (6) sind Lösungsmittel, Emulgatoren, Phasentransferkatalysatoren, Konservierungsstoffe, antimikrobiell wirksame Substanzen, wie z.B. Bakterizide, Fungizide oder Algizide, Geruchsstoffe, geruchshemmende oder geruchsvermindernde Stoffe, Entschäumer, Rheologieregler, Farbstoffe, Pigmente, Redoxstabilisatoren, flammabweisbar machende Stoffe, Lichtschutzmittel und Hitzestabilisatoren. Darüber hinausgehend werden bei dem erfindungsgemäßen Verfahren besonders bevorzugt keine weiteren Stoffe eingesetzt.

Beispielsweise kann das erfindungsgemäße Verfahren mit oder ohne Lösungsmittel als 1-Phasen- oder 2-Phasen-Reaktion oder in Dispersion, wie z.B. Micro- oder Macro-Emulsion, durchgeführt werden.

Beispiele für geeignete Lösungsmittel, die beim erfindungsgemäßen Verfahren eingesetzt werden können, sind Pentan, Petrolether, n-Hexan, Hexan-Isomerengemische, Cyclohexan, Heptan, Oktan, Waschbenzin, Dekalin, Benzol, Toluol, Xylol, Isopropanol, Butanol und dessen Isomere, Diethylether, Di-n-Propylether, Diisopropylether, Di-n-Butylether, Ethylenglykolmonomethylether, Ethylenglykolmonoethylether, Ethylenglykoldimethylether, Ethylenglykoldiethylether, Diethylenglykoldimethylether, Methylacetat, Ethylacetat, n-, sec. und tert.-Butylacetat, Dichlormethan, Trichlormethan, Tetrachlormethan, 1,2-Dichlorethan, Trichlorethylen, Tetrachlorethylen, Chlorbenzol, lineare und cyclische Siloxane sowie Mischungen der genannten Lösungsmittel.

Wird das Verfahren als 2-Phasen-Reaktion durchgeführt, so ist eine möglichst gute Homogenisierung der nicht miteinander mischbaren Phasen und die Schaffung einer großen inneren Reaktionsfläche zu gewährleisten, wie z.B. durch Erzeugen einer durchschnittlichen Teilchengrößen von < 500 µm. Die intensive Durchmischung der Reaktionsphasen kann prinzipiell mit allen nach dem Stand der Technik bekannten Mischsystemen, wie z.B. Rührwerken aller Art, Hochgeschwindigkeitsrührwerken, wie z.B. solche erhältlich unter der Marke Ultra-Turrax® oder ähnliches Dissolversystem, mittels Ultraschallsonden oder -bädern, oder - wie z.B. bei kontinuierlicher Reaktionsführung - mit statischen oder bewegten Mischelementen, erfolgen.

Wird das Verfahren in Dispersion durchgeführt, so können entsprechend Emulgatoren bzw. oberflächenaktive Mittel, wie etwa nichtionische, anionische, kationische oder amphotere Emulgatoren, vorhanden sein, wobei die Herstellung der Dispersion in beliebiger und dem Fachmann bekannter Art und Weise erfolgen kann.

Bevorzugt handelt es sich bei der gegebenenfalls eingesetzten Komponente (6) um kompatibilisierende Lösungsmittel, insbesondere wenn es sich bei Komponente (1) und/oder (2) um einen Feststoff und/oder miteinander nicht mischbare, flüssige Verbindungen handelt, sowie um Emulgatoren, insbesondere wenn das erfindungsgemäße Verfahren in einem 2- oder Mehrphasensystem durchgeführt wird.

Falls weitere Stoffe (6) eingesetzt werden, handelt es sich um Mengen von bevorzugt 5 bis 200 Gewichtsteile, besonders bevorzugt um 10 bis 100 Gewichtsteile, jeweils bezogen auf 100 Gewichtsteile des Gesamtgewicht der Komponenten (1) und (2).

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Bei dem erfindungsgemäßen Verfahren werden die eingesetzten Komponenten auf an sich bekannte Art und Weise miteinander vermischt und reagieren gelassen. Die erfindungsgemäß eingesetzten Komponenten können hierbei in beliebiger Reihenfolge miteinander vermischt, der Reaktion zugeführt und/oder zur Reaktion gebracht werden. Bei stärker exothermer Reaktion ist ein Zudosieren der Komponente (1) zu einem Gemisch bestehend aus den Komponenten (2), (4) und (5) sowie ggf. (3) und/oder (6) bevorzugt. Falls es sich bei den gegebenenfalls eingesetzten weiteren Komponenten (6) um Substanzen handelt, welche bekanntermaßen die Anlagerung von Si-gebundenem Wasserstoff an aliphatisch ungesättigte Kohlenstoff-Kohlenstoff-Mehrfachbindung erschweren oder inhibieren, ist die Zugabe dieser Komponenten nach Ende der erfindungsgemäßen Umsetzung bevorzugt.

Das erfindungsgemäße Verfahren wird vorzugsweise bei einem Druck der umgebenden Atmosphäre, also etwa bei 900 bis 1100 hPa, durchgeführt, es kann aber auch bei höheren und niedrigeren Drücken durchgeführt werden.

Ferner wird das erfindungsgemäße Verfahren bei einer Temperatur von bevorzugt 20 bis 200°C, besonders bevorzugt 50 bis 180°C und ganz besonders bevorzugt 60 bis 130°C, durchgeführt.

Das erfindungsgemäße Verfahren kann absatzweise, halbkontinuierlich oder vollkontinuierlich in dafür geeigneten Reaktorsystemen, wie z.B. Batch-Reaktor, Batch-Reaktor-Kaskade, Loop-Reaktor, Strömungsrohr, Rohrreaktor, Microreaktor, Kreiselpumpen und beliebige Kombinationen hiervon, durchgeführt werden.

Nach Beendigung der erfindungsgemäßen Umsetzung können die erhaltenen Reaktionsprodukte nach beliebigen und bisher bekannten Verfahrensschritten isoliert werden. Falls erwünscht, können nach der Umsetzung leichtflüchtige Komponenten und ggf. eingesetztes Lösungsmittel durch Destillation entfernt werden.

An das erfindungsgemäße Verfahren können sich darüber hinaus beliebige weitere Prozessschritte anschließen, mittels derer die gewünschten Eigenschaften der nach dem erfindungsgemäßen Verfahren erhaltenen Organosiliciumverbindung gezielt eingestellt werden können. Die Durchführung der Prozessschritte orientiert sich dabei grundsätzlich am Stand der Technik und erfolgt in der dem Fachmann bekannten Art und Weise. Beispiele für solche Folgeumsetzungen sind Equilibrierungsreaktionen mit weiteren Organopolysiloxanen, Kondensation der Organosiliciumverbindung, weitere organofunktionelle Modifizierung der Organosiliciumverbindung, wie z.B. Veretherung, Veresterung oder Urethanbildung mit Isocyanaten.

Das erfindungsgemäße Verfahren hat den Vorteil, dass es einfach und kostengünstig in der Durchführung ist.

Das erfindungsgemäße Verfahren bietet den Vorteil, dass es durch die gute Verträglichkeit der verwendeten cyclischen - Etherkomponenten mit der Siloxanphase eine vollständig homogene Reaktionsführung ermöglicht.

Das erfindungsgemäße Verfahren hat des weiteren den Vorteil, dass es universell einsetzbar ist, und insbesondere für eine kontinuierliche Prozessführung hervorragend geeignet ist.

Ferner hat das erfindungsgemäße Verfahren den Vorteil, dass Nebenreaktionen bereits durch geringe Mengen der cyclischen - Etherkomponenten vollständig eliminiert werden, ohne dass dabei die von den herkömmlichen Additivsystemen bekannten Nachteile, wie Verlangsamung oder Inhibierung der Reaktion, Notwendigkeit größerer Katalysator-Mengen und höherer Temperaturen, etwaiger Verlust der Selektivität, Vorliegen eines heterogenes Reaktionsgemisches, auftreten.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 20°C. Sofern nicht anders angegeben, werden die nachstehenden Beispiele bei einem Druck der umgebenden Atmosphäre, also bei etwa 1000 hPa, und Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiel 1

Zu 204,0 g Ethylenglycolmonoallylether werden 0,46 g einer Lösung von Hexachloroplatinsäure (0,48 % Pt-Gehalt) und 500 ppm THF (0,22 g) gegeben. Die klare homogene Mischung wird auf 80°C erwärmt, worauf man über einen Zeitraum von ca. 2 Stunden insgesamt 250,0 g eines linearen Siloxans bestehend aus Dimethylsiloxy-, Hydrogenmethylsiloxy- und Trimethylsiloxyeinheiten mit einem Aktivwasserstoffgehalt von 0,64 % und einer Viskosität von 3,7 mm²/s im Temperaturbereich von 80-100°C zudosiert. Nach weiteren 2 Stunden bei 90°C ist ein Umsatz von mehr als 99 % erreicht. Das Rohprodukt wird bei 130°C im Ölpumpenvakuum von flüchtigen Bestandteilen befreit und abgekühlt. Man erhält ein bräunliches, klares Carbinolfunktionelles Siloxan mit durchschnittlich ca. 4 2-Hydroxyethoxypropylgruppen pro Siloxankette. Die Polymerviskosität beträgt 389 mm²/s bei 25°C.

### Beispiel 2

Die in Beispiel 1 beschrieben Arbeitsweise wird wiederholt mit der Abänderung, dass 500 ppm THF durch 0,22 g Cyclohexenoxid ersetzt werden. Nach identischer Reaktion und Aufarbeitung erhält man ein klares Polymer mit einer Viskosität von nur 335 mm²/s bei 25°C.

### Vergleichsbeispiel 1

Gemäß dem Stand der Technik werden anstelle von Cyclohexenoxid 2000 ppm Natriumhydrogencarbonat als Stabilisator eingesetzt. Das unlösliche Salz muss durch starkes Rühren in Schwebe gehalten werden. Nach Reaktion, Filtration und Entfernung flüchtiger Bestandteile erhält man ein klares, bräunliches Produkt mit einer Viskosität von 868 mm²/s bei 25°C. Die NMR-spektroskopische Untersuchung des Öls weist signifikante Mengen Acetal und SiOC-verknüpfte Anteile als Ursache für die im Vergleich zu Beispiel 2 deutlich erhöhte Produktviskosität aus. NaHCO₃ ist demnach wesentlich weniger geeignet, den Aufbau höher molekularer Produkte durch verknüpfende Neben- und Folgereaktion zu verhindern.

### Beispiel 3

Die nachfolgend genannten Ausgangsstoffe werden bei 25°C homogen vermischt:
224,7 g eines Polysiloxans bestehend aus Dimethylsiloxy-, Hydrogenmethylsiloxy- und Trimethylsiloxyeinheiten mit einem Aktivwasserstoffgehalt von 0,089 % und einer Viskosität von 91 mm²/s, 132,1 g eines Allylpolyethers der durchschnittlichen Formel CH₂=CHCH₂O(C₂H₄O)_{10,2}H sowie 0,18 g Limonenoxid (entsprechend 500 ppm). Nach Erwärmen auf 100°C werden 0,37 g Hexachloroplatinsäure-Lösung (Pt-Gehalt = 0,48 %) zugegeben. Unter zügiger Erwärmung auf 124°C klart das Reaktionsgemisch auf. Nach einer weiteren Stunde bei 100°C werden 98 % SiH-Umsatz erreicht. Das klare Öl hat bei 25°C eine Viskosität von 1590 mm²/s. Im ¹H-NMR-Spektrum kann kein Acetalproton (-O-CHR-O bei 4,45 ppm) nachgewiesen werden (Nachweisgrenze: 0,2 Mol-%, bezogen auf 130 Mol-% eingesetzten Allyl-Rohstoff).

### Vergleichsbeispiel 2

Beispiel 3 wird sinngemäß ohne Limonenoxid als Stabilisator durchgeführt. Man erhält ein klares Öl mit erheblich höherer Viskosität: 2086 mm²/s bei 25°C. Der nachweisbare Acetalgehalt beträgt 1,1 Mol-%, bezogen auf 130 Mol-% eingesetzten Allyl-Rohstoff.

### Beispiel 4

Zu 153 g eines Allylpolyethers der durchschnittlichen Formel CH₂=CHCH₂O(C₂H₄O)_{10,6}H, werden 0,45 g einer Lösung von Hexachloroplatinsäure (0,48 % Pt-Gehalt) und 500 ppm Cyclohexenoxid (0,109 g) gegeben. Die klare homogene Mischung wird auf 110°C erwärmt, worauf man über einen Zeitraum von ca. 0,5 Stunden insgesamt 65 g eines linearen Siloxans bestehend aus Dimethylsiloxy-, Hydrogenmethylsiloxy- und Trimethylsiloxyeinheiten mit einem Aktivwasserstoffgehalt von 0,31 % und einer Viskosität von 39 mm²/s im Temperaturbereich von 110-115°C zudosiert. Nach weiteren 2,5 Stunden bei 110°C ist ein Umsatz von mehr als 98 % erreicht. Das Rohprodukt wird bei 130°C im Ölpumpenvakuum von flüchtigen Bestandteilen befreit und abgekühlt. Man erhält ein goldgelbes, klares polyetherfunktionelles Siloxan mit durchschnittlich ca. 10 Polyethergruppen pro Siloxankette. Die Polymerviskosität beträgt 1050 mm²/s bei 25°C. Im ¹H-NMR-Spektrum kann kein Acetalproton nachgewiesen werden (Nachweisgrenze: 0,15 Mol-%, bezogen auf 130 Mol-% eingesetzten Allyl-Rohstoff). Im ²⁹Si-NMR finden sich keine Hinweise auf SiOC-verknüpfte D-Einheiten (Nachweisgrenze: 0,08 %, bezogen auf die Gesamtzahl an D-Einheiten pro Molekül).

### Vergleichsbeispiel 3

Beispiel 4 wird sinngemäß ohne Cyclohexenoxid als Stabilisator durchgeführt. Bereits kurz nach der vollständigen Zugabe des Siloxans zum Polyether tritt komplette Vergelung des Ansatzes ein.

### Vergleichsbeispiel 4

Beispiel 4 wird sinngemäß unter Verwendung von 500 ppm Natriumhydrogencarbonat als Stabilisator durchgeführt, wobei der Feststoff durch intensives Rühren in der Schwebe gehalten wird. Nach Reaktion, Filtration und Entfernung flüchtiger Bestandteile erhält man ein braunes Öl mit erheblich höherer Viskosität: 4170 mm²/s bei 25 °C. Der nachweisbare Acetalgehalt beträgt 34 Mol-%, bezogen auf 130 Mol-% eingesetzten Allyl-Rohstoff. NaH-CO₃ ist demnach um ein Vielfaches weniger geeignet, den Aufbau höher molekularer Produkte durch verknüpfende Neben- und Folgereaktion zu verhindern.

### Vergleichsbeispiel 5

Beispiel 4 wird sinngemäß unter Verwendung von 0,2 % Natriumacetat als Stabilisator durchgeführt, wobei der Feststoff durch intensives Rühren in der Schwebe gehalten wird. Nach Reaktion, Filtration und Entfernung flüchtiger Bestandteile erhält man ein braunes Öl mit einer Viskosität von 1960 mm²/s bei 25°C.
Der nachweisbare Acetalgehalt beträgt 1,95 Mol-%, bezogen auf 130 Mol-% eingesetzten Allyl-Rohstoff. Der nachweisbare Anteil an SiOC-verknüpften D-Einheiten beträgt 1,6 %, bezogen auf die Gesamtzahl an D-Einheiten pro Molekül.

### Vergleichsbeispiel 6

Beispiel 4 wird sinngemäß unter Verwendung von 0,5 % Dinatriumhydrogenphosphat Dihydrat als Stabilisator durchgeführt, wobei der Feststoff durch intensives Rühren in der Schwebe gehalten wird. Nach Reaktion, Filtration und Entfernung flüchtiger Bestandteile erhält man ein braunes Öl mit einer Viskosität von 1760 mm²/s bei 25°C. Der nachweisbare Acetalgehalt beträgt 1,6 Mol-%, bezogen auf 130 Mol-% eingesetzten Allyl-Rohstoff. Der nachweisbare Anteil an SiOC-verknüpften D-Einheiten beträgt 1,4 %, bezogen auf die Gesamtzahl an D-Einheiten pro Molekül.

### Beispiel 5

Zu 55,7 g Ethylenglycolmonoallylether werden 0,54 g einer Lösung von Hexachloroplatinsäure (0,48 % Pt-Gehalt) und 250 ppm Vinylcyclohexenmonoepoxid (0,064 g) gegeben. Die klare homogene Mischung wird auf 60°C erwärmt, worauf man über einen Zeitraum von ca. 2 Stunden insgesamt 200 g eines linearen Siloxans bestehend aus Dimethylsiloxy- und Hydrogendimethylsiloxyeinheiten mit einem Aktivwasserstoffgehalt von 0,21 % und einer Viskosität von 7,5 mm²/s im Temperaturbereich von 60-70°C zudosiert. Nach erneuter Zugabe von 0,27 g einer Lösung von Hexachloroplatinsäure (0,48 % Pt-Gehalt) und weiteren 2 Stunden Reaktionszeit bei 60°C ist ein Umsatz von mehr als 99 % erreicht. Das Rohprodukt wird bei 140°C im Ölpumpenvakuum von flüchtigen Bestandteilen befreit und abgekühlt. Man erhält ein bräunliches, klares Carbinolfunktionelles Siloxan mit zwei 2-Hydroxyethoxypropylgruppen pro Siloxankette. Die Polymerviskosität beträgt 285 mm²/s bei 25°C.

### Beispiel 6

Zu 13,3 g Ethylenglycolmonoallylether werden 0,12 g einer Lösung von Hexachloroplatinsäure (0,48 % Pt-Gehalt) und 500 ppm Limonen-1,2-epoxid (0,123 g) gegeben. Die klare homogene Mischung wird auf 80 °C erwärmt, worauf man über einen Zeitraum von ca. 2 h insgesamt 200 g eines linearen Siloxans bestehend aus Dimethylsiloxy- und Hydrogendimethylsiloxyeinheiten mit einem Aktivwasserstoffgehalt von 0,052 % und einer Viskosität von 57 mm²/s im Temperaturbereich von 80-85°C zudosiert. Nach erneuter Zugabe von 0,12 g einer Lösung von Hexachloroplatinsäure (0,48 % Pt-Gehalt) und weiteren 2 Stunden Reaktionszeit bei 80°C ist ein Umsatz von mehr als 98 % erreicht. Das Rohprodukt wird bei 140°C im Ölpumpenvakuum von flüchtigen Bestandteilen befreit und abgekühlt. Man erhält ein bräunliches, klares Carbinolfunktionelles Siloxan mit zwei 2-Hydroxyethoxypropylgruppen pro Siloxankette. Die Polymerviskosität beträgt 396 mm²/s bei 25°C.

### Beispiel 7

Zu 136,8 g Ethylenglycolmonoallylether werden 2,84 g einer Lösung von Hexachloroplatinsäure (0,48 % Pt-Gehalt) und 250 ppm Cyclohexenoxid (0,362 g) gegeben. Die klare homogene Mischung wird auf 60°C erwärmt, worauf man über einen Zeitraum von ca. 0,5 Stunden insgesamt 1200 g eines linearen Siloxans bestehend aus Dimethylsiloxy- und Hydrogenmethylsiloxy- und Trimethylsiloxyeinheiten mit einem Aktivwasserstoffgehalt von 0,086 % und einer Viskosität von 102 mm²/s im Temperaturbereich von 60-70°C zudosiert. Nach einer weiteren Stunde Reaktionszeit bei 60°C ist ein Umsatz von mehr als 99 % erreicht. Das Rohprodukt wird bei 140°C im Ölpumpenvakuum von flüchtigen Bestandteilen befreit und abgekühlt. Man erhält ein schwach braunes, klares Carbinolfunktionelles Siloxan mit durchschnittlich 4,5 2-Hydroxyethoxypropylgruppen pro Siloxankette. Die Polymerviskosität beträgt 248 mm²/s bei 25°C. Weder das ¹H-NMR- noch ²⁹Si-NMR-Spektrum des Produktes geben einen Hinweis auf die Bildung von Nebenprodukten durch verknüpfende Neben- und Folgereaktionen.

### Beispiel 8

Zu 43 g Ethylenglycolmonoallylether werden 2,64 g einer Lösung von Hexachloroplatinsäure (0,48 % Pt-Gehalt) und 250 ppm Cyclohexenoxid (0,337 g) gegeben. Die klare homogene Mischung wird auf 60°C erwärmt, worauf man über einen Zeitraum von ca. 0,5 Stunden insgesamt 1200 g eines linearen Siloxans bestehend aus Dimethylsiloxy- und Hydrogenmethylsiloxy- und Trimethylsiloxyeinheiten mit einem Aktivwasserstoffgehalt von 0,027 % und einer Viskosität von 425 mm²/s im Temperaturbereich von 60-70°C zudosiert. Nach einer weiteren Stunde Reaktionszeit bei 60°C ist ein Umsatz von mehr als 98 % erreicht. Das Rohprodukt wird bei 140°C im Ölpumpenvakuum von flüchtigen Bestandteilen befreit und abgekühlt. Man erhält ein schwach braunes, klares Carbinolfunktionelles Siloxan mit durchschnittlich 2,8 2-Hydroxyethoxypropylgruppen pro Siloxankette. Die Polymerviskosität beträgt 492 mm²/s bei 25°C. Weder das ¹H-NMR- noch ²⁹Si-NMR-Spektrum des Produktes geben einen Hinweis auf die Bildung von Nebenprodukten durch verknüpfende Neben- und Folgereaktionen.

### Beispiel 9

Die nachfolgend genannten Ausgangsstoffe werden bei 25°C homogen vermischt:
102 g eines linearen Siloxans bestehend aus Dimethylsiloxy- und Hydrogendimethylsiloxy-einheiten mit einem Aktivwasserstoffgehalt von 0,21 % und einer Viskosität von 6,5 mm²/s, 500 ppm Cyclohexenoxid (0,068 g) 17,1 g Toluol und 17,4 g Allylalkohol. Nach Erwärmen auf 110°C werden 0,29 g einer Hexachloroplatinsäure-Lösung (Pt-Gehalt = 0,48 %) zugegeben. Nach einer Stunde Reaktionszeit bei 110°C gibt man weitere 0,145 g Hexachloroplatinsäure-Lösung (Pt-Gehalt = 0,48 %) zu und lässt bei 110°C rühren. Nach 2 Stunden wird ein SiH-Umsatz > 99 % erreicht. Das Rohprodukt wird bei 110°C im Ölpumpenvakuum von flüchtigen Bestandteilen befreit und abgekühlt. Man erhält ein goldgelbes, klares Carbinolfunktionelles Siloxan mit 2 2-Hydroxypropylgruppen pro Siloxankette. Die Polymerviskosität beträgt 51 mm²/s bei 25°C.

## Patentansprüche

1. Verfahren zur Anlagerung von Si-gebundenem Wasserstoff an aliphatisch ungesättigte Kohlenstoff-Kohlenstoff-Mehrfachbindung und Ethersauerstoffatome enthaltenden Verbindungen in Anwesenheit von Carbinolgruppen, **dadurch gekennzeichnet, dass** das Reaktionsgemisch als weitere Komponente mindestens einen cyclischen Ether enthält.

2. Verfahren nach Anspruch 1, **dadurch gekennzeichnet, dass** es sich bei Verbindungen mit Si-gebundenem Wasserstoff (1) um Organosiliciumverbindungen enthaltend Einheiten der Formel
Rₐ(R¹O)_{b}H_{c}SiO_{(4-a-b-c)/2} (I)
handelt, wobei
R gleich oder verschieden sein kann und einen einwertigen, SiCgebundenen, gegebenenfalls substituierten Kohlenwasserstoffrest, der durch Sauerstoffatome unterbrochen sein kann, bedeutet,
R¹ gleich oder verschieden sein kann und gleich Wasserstoffatom oder einwertiger gegebenenfalls substituierter Kohlenwasserstoffrest, der durch Heteroatome unterbrochen sein kann, bedeutet,
a 0, 1, 2 oder 3 ist,
b 0, 1, 2 oder 3 ist, und
c 0, 1, 2 oder 3 ist,
mit der Maßgabe, dass die Summe a+b+c ≤ 4 ist und die Organosiliciumverbindung der Formel (I) pro Molekül mindestens ein Sigebundenes Wasserstoffatom aufweist.

3. Verfahren nach Anspruch 1 oder 2, **dadurch gekennzeichnet, dass** es sich bei den aliphatisch ungesättigte Kohlenstoff-Kohlenstoff-Mehrfachbindung und Ethersauerstoffatome enthaltenden Verbindungen (2) um solche ausgewählt aus aliphatisch ungesättigte, lineare oder verzweigte Ether und aliphatisch ungesättigte, lineare oder verzweigte Ethercarbinole handelt, wobei die Ether und Ethercarbinole Bestandteil von Copolymeren, wie z.B. solche mit Organopolysiloxanblöcken, sein können.

4. Verfahren nach einem oder mehreren der Ansprüche 1 bis 3, **dadurch gekennzeichnet, dass** es sich bei den aliphatisch ungesättigten, Ethersauerstoffatome und Carbinolgruppen enthaltenden Verbindungen um solche handelt, die eine oder mehrere primäre oder sekundäre Carbinolgruppen tragen und aliphatisch endständig ungesättigt sind.

5. Verfahren nach einem oder mehreren der Ansprüche 1 bis 4, **dadurch gekennzeichnet, dass** die aliphatisch ungesättigte Verbindung (2) in Mengen von 0,001 bis 5 Mol, besonders bevorzugt 0,01 bis 2 Mol, jeweils bezogen auf ein Mol Si-gebundenen Wasserstoff, eingesetzt wird.

6. Verfahren nach einem oder mehreren der Ansprüche 1 bis 5, **dadurch gekennzeichnet, dass** es sich bei den erfindungsgemäß eingesetzten Ethern um Verbindungen handelt, bei denen der E-thercyclus 3 bis 10 Ringatome aufweist.

7. Verfahren nach einem oder mehreren der Ansprüche 1 bis 6, **dadurch gekennzeichnet, dass** Komponente (4) in Mengen von 0,1 bis 50 000 Gew.-ppm (Gewichtsteile je Million Gewichtsteile), bezogen auf das Gesamtgewicht von Komponente (1) und (2), eingesetzt wird.

8. Verfahren nach einem oder mehreren der Ansprüche 1 bis 7, **dadurch gekennzeichnet, dass** es in Anwesenheit von Katalysatoren (5) durchgeführt wird, welche die Anlagerung von Si-gebundenen Wasserstoff an aliphatisch ungesättigte Kohlenstoff-Kohlenstoff-Mehrfachbindung fördern.

9. Verfahren nach einem oder mehreren der Ansprüche 1 bis 3, **dadurch gekennzeichnet, dass** es sich bei den Ethern ohne Carbinolgruppen um
R³-{[C₂H₄O]_{g}-[C₃H₆O]ₕ-[(CH₂)₄O]ᵢ-R⁴}_{z} (III)
handelt, wobei
R³ eine für R² angegebene Bedeutung hat,
R⁴ einen einwertigen Kohlenwasserstoffrest mit 1 bis 20 Kohlenstoffatomen oder Acetylrest, bevorzugt einen Methyl-, 1-Butyl-, Myristyl-, Cetyl-, Stearyl- oder Acetyl-Rest, darstellt,
z entsprechend der Wertigkeit von Rest R³ gleich 1 oder 2 ist, g, h, i jeweils unabhängig voneinander 0 oder eine ganze Zahl von 1-200 sind, mit der Maßgabe, dass die Summe g+h+i≥0 ist.

10. Verfahren nach einem oder mehreren der Ansprüche 1 bis 3, **dadurch gekennzeichnet, dass** Komponente (1) mit Ethern ohne Carbinolgruppen als Komponente (2) und Carbinolgruppen aufweisender Verbindung (3) umgesetzt wird, wobei das Reaktionsgemisch als weitere Komponente mindestens einen cyclischen Ether sowie gegebenenfalls Katalysator (5) enthält.

## Claims

1. Process for adding Si-bonded hydrogen to aliphatically unsaturated compounds containing carbon-carbon multiple bond and ether oxygen atoms in the presence of carbinol groups, **characterized in that** the reaction mixture comprises, as a further component, at least one cyclic ether.

2. Process of Claim 1, **characterized in that** compounds having Si-bonded hydrogen (1) are organosilicon compounds containing units of the formula
Rₐ(R¹O)_{b}H_{c}SiO_{(4-a-b-c)/2} (I)
where
R may be the same or different and is a monovalent, SiC-bonded, optionally substituted hydrocarbon radical which may be interrupted by oxygen atoms,
R¹ may be the same or different and is a hydrogen atom or a monovalent, optionally substituted hydrocarbon radical which may be interrupted by heteroatoms,
a is 0, 1, 2 or 3,
b is 0, 1, 2 or 3 and
c is 0, 1, 2 or 3,
with the proviso that the sum of a+b+c is ≤ 4 and the organosilicon compound of the formula (I) has at least one Si-bonded hydrogen atom per molecule.

3. Process of Claim 1 or 2, **characterized in that** the compounds (2) containing aliphatically unsaturated carbon-carbon multiple bond and ether oxygen atoms are selected from aliphatically unsaturated, linear or branched ethers and aliphatically unsaturated, linear or branched ether carbinols, and the ethers and ether carbinols may be a constituent of copolymers, for example those with organopolysiloxane blocks.

4. Process of one or more of Claims 1 to 3, **characterized in that** the aliphatically unsaturated compounds containing ether oxygen atoms and carbinol groups are those which bear one or more primary or secondary carbinol groups and are aliphatically terminally unsaturated.

5. Process of one or more of Claims 1 to 4, **characterized in that** the aliphatically unsaturated compound (2) is used in amounts of from 0.001 to 5 mol, more preferably from 0.01 to 2 mol, based in each case on one mole of Si-bonded hydrogen.

6. Process of one or more of Claims 1 to 5, **characterized in that** the ethers used in accordance with the invention are compounds in which the ether cycle has from 3 to 10 ring atoms.

7. Process of one or more of Claims 1 to 6, **characterized in that** component (4) is used in amounts of from 0.1 to 50 000 ppm by weight (parts by weight per million parts by weight), based on the total weight of component (1) and (2).

8. Process of one or more of Claims 1 to 7, which is carried out in the presence of catalysts (5) which promote the addition of Si-bonded hydrogen to aliphatically unsaturated carbon-carbon multiple bond.

9. Process of one or more of Claims 1 to 3, **characterized in that** the ethers without carbinol groups are
R³-{[C₂H₄O]_{g}-[C₃H₆O]ₕ-[(CH₂)₄O]ᵢ-R⁴}_{z} (III)
where
R³ is as defined for R²,
R⁴ is a monovalent hydrocarbon radical having from 1 to 20 carbon atoms or acetyl radical, preferably a methyl, 1-butyl, myristyl, cetyl, stearyl or acetyl radical,
z, according to valency of the R³ radical, is 1 or 2,
g, h, i are each independently 0 or an integer of 1-200, with the proviso that the sum of g+h+i is ≥ 0.

10. Process of one or more of Claims 1 to 3, **characterized in that** component (1) is reacted with ethers without carbinol groups as component (2) and compound having carbinol groups (3), and the reaction mixture comprises, as a further component, at least one cyclic ether and also optionally catalyst (5).

## Revendications

1. Procédé d'addition d'hydrogène lié par Si sur des composés contenant des liaisons multiples aliphatiquement insaturées carbone-carbone et des atomes d'oxygène de type éther en présence de groupements carbinol, **caractérisé en ce que** le mélange réactionnel contient comme autre composant au moins un éther cyclique.

2. Procédé selon la revendication 1, **caractérisé en ce qu'**il s'agit, pour les composés contenant de l'hydrogène lié par Si (1) de composés organosiliciés contenant des unités de formule
Rₐ (R¹O) _{b}H_{c}SiO_{(4-a-b-c)/2} (I)
où
R peut être identique ou différent et signifie un radical hydrocarboné monovalent, lié par SiC, le cas échéant substitué, qui peut être interrompu par des atomes d'oxygène,
R¹ peut être identique ou différent et signifie un atome d'hydrogène ou radical hydrocarboné monovalent le cas échéant substitué, qui peut être interrompu par des hétéroatomes,
a vaut 0, 1, 2 ou 3,
b vaut 0, 1, 2 ou 3, et
c vaut 0, 1, 2 ou 3,
à condition que la somme a+b+c ≤ 4 et que le composé organosilicié de formule (I) présente par molécule au moins un atome d'hydrogène lié par Si.

3. Procédé selon la revendication 1 ou 2, **caractérisé en ce qu'**il s'agit, pour les composés (2) contenant des doubles liaisons aliphatiquement insaturées carbone-carbone et des atomes d'oxygène de type éther, de composés choisis parmi les éthers aliphatiquement insaturés, linéaires ou ramifiés, les éthercarbinols linéaires ou ramifiés, les éthers et les éthercarbinols faisant partie de copolymères, tels que par exemple ceux avec des blocs d'organopolysiloxane.

4. Procédé selon l'une ou plusieurs des revendications 1 à 3, **caractérisé en ce qu'**il s'agit, pour les composés aliphatiquement insaturés, contenant des atomes d'oxygène de type éther et des groupements carbinol, de composés qui portent un ou plusieurs groupements carbinol primaires ou secondaires et qui sont aliphatiquement insaturés en position terminale.

5. Procédé selon l'une ou plusieurs des revendications 1 à 4, **caractérisé en ce qu'**on utilise le composé (2) aliphatiquement insaturé en des quantités de 0,001 à 5 moles, de manière particulièrement préférée de 0,01 à 2 moles, à chaque fois par rapport à une mole d'hydrogène liée par Si.

6. Procédé selon l'une ou plusieurs des revendications 1 à 5, **caractérisé en ce qu'**il s'agit, pour les éthers utilisés selon l'invention, de composés dans lesquels le cycle éther présente 3 à 10 atomes de cycle.

7. Procédé selon l'une ou plusieurs des revendications 1 à 6, **caractérisé en ce que** le composant (4) est utilisé en des quantités de 0,1 à 50 000 ppm en poids (parties en poids par million de parties en poids) par rapport au poids total de composants (1) et (2).

8. Procédé selon l'une ou plusieurs des revendications 1 à 7, **caractérisé en ce qu'**il est réalisé en présence de catalyseurs (5), qui favorisent l'addition d'hydrogène lié par Si sur des liaisons multiples aliphatiquement insaturées carbone-carbone.

9. Procédé selon l'une ou plusieurs des revendications 1 à 3, **caractérisé en ce qu'**il s'agit, pour les éthers sans groupements carbinol, de
R³-{[C₂H₄O]_{g}-[C₃H₆O]ₕ-[(CH₂)₄O]ᵢ-R⁴}_{z} (III)
où
R³ a une signification indiquée pour R²,
R⁴ représente un radical hydrocarboné monovalent, comprenant 1 à 20 atomes de carbone ou un radical acétyle, de préférence un radical méthyle, 1-butyle, myristyle, cétyle, stéaryle ou acétyle,
z vaut, selon la valence du radical R³, 1 ou 2,
g, h, i représentent, à chaque fois indépendamment l'un de l'autre, 0 ou un nombre entier de 1-200, à condition que la somme g+h+i ≥ 0.

10. Procédé selon l'une ou plusieurs des revendications 1 à 3, **caractérisé en ce que** le composé (1) est transformé avec des éthers sans groupements carbinol comme composant (2) et un composé (3) présentant des groupements carbinol, le mélange réactionnel contenant comme autre composant au moins un éther cyclique ainsi que le cas échéant un catalyseur (5).
